# EUROPEAN PATENT APPLICATION

(11) **EP 2 958 006 A1**
(43) Date of publication of application: **23.12.2015**
(21) Application number: 15173076.9
(22) Date of filing: 22.06.2015
(51) Int. Cl.: G06F 3/0488, G06F 1/16, H04M 1/02

(54) **ELECTRONIC DEVICE AND METHOD FOR CONTROLLING DISPLAY**

(30) Priority: 20.06.2014 KR 20140075756
(71) Applicant: Samsung Electronics Co., Ltd, Gyeonggi-do 443-742 (KR)
(72) Inventor: Cha, Soon-Hyun, 443-742 Suwon-si (KR)
(74) Representative: Nederlandsch Octrooibureau

(57) **Abstract**

An electronic device and method for controlling a deformable display are provided. The method includes sensing deformation of the display, comparing a degree of the sensed deformation with a predetermined value, dividing at least a part of the display based on a result of the comparison, determining at least a part of divided areas to be an active area or inactive area, and controlling at least part of information displayed in at least a part of the divided areas.

## Description

### TECHNICAL FIELD

The present disclosure relates to an electronic device and method for controlling a display.

### BACKGROUND

Displays for sensing a touch input in electronic devices have recently become larger in size. An electronic device may receive a touch input or a hovering input through such a display. Along with the popularity of the touch input technology that enables a direct touch input on a display, electronic devices are mostly equipped with a touch sensing function. Since the displays may substitute for separate input devices operating in connection to a display, such as a keypad or a mouse, they find their use in more applications. The touch input technology is also applied to a flexible display in view of the development of display panels and touch-based technologies.

The flexible display refers to the form of display that can be bent, rolled, and otherwise deformed. Since it is lightweight and not fragile, the flexible display may display objects including pictures, videos, and publications such as a magazine, a textbook, a book, and the like. Also, various designs are available to the flexible display as it is durable and freely bent.

An existing touch input method designed for application to a non-flexible display is still adopted for the flexible display, with no regard to bending of the flexible display. If a user wants to apply a touch input to the flexible display in a bent state, the existing touch input method may not be viable.

Accordingly, there is a need for sensing a user's touch input on a flexible display even in a bent state of the flexible display.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide an electronic device and method for controlling a display. Unless stated otherwise, the term display in this disclosure can refer to a flexible or deformable display.

In accordance with an aspect of the present disclosure, a method for controlling a display of an electronic device is provided. The method includes sensing deformation of the display, comparing a degree of the sensed deformation with a predetermined value, dividing at least a part of the display based on a result of the comparison, determining at least a part of divided areas to be an active area or inactive area, and controlling at least part of information displayed in at least a part of the divided areas.

In accordance with another aspect of the present disclosure, an electronic device is provided. The electronic device includes a display, a sensor unit configured to sense deformation of the display, and a controller configured to compare a degree of the sensed deformation with a predetermined value, to divide at least a part of the display based on a result of the comparison, to determine at least a part of divided areas to be an active area or inactive area, and to control at least part of information displayed in at least a part of the divided areas.

In accordance with another aspect of the present disclosure, a non-transitory computer-readable storage medium storing a program for controlling a display of an electronic device is provided. The program includes first instructions to sense deformation of the display, second instructions to compare a degree of the sensed deformation with a predetermined value, third instructions to divide at least a part of the display based on a result of the comparison, fourth instructions to determine at least a part of divided areas to be an active area or inactive area, and fifth instructions to control at least part of information displayed in at least a part of the divided areas.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a network environment including an electronic device according to various embodiments of the present disclosure;
FIG. 2 is a block diagram of a display controller according to various embodiments of the present disclosure;
FIG. 3 is a flowchart illustrating an operation for controlling a display in an electronic device according to various embodiments of the present disclosure;
FIG. 4A is a view illustrating an electronic device grabbed with a hand according to various embodiments of the present disclosure;
FIG. 4B is a view illustrating division of a display when an electronic device is bent according to various embodiments of the present disclosure;
FIG. 4C is a view illustrating at least a part of a display which is divided and an operation triggered by an input according to various embodiments of the present disclosure;
FIG. 5A is a view illustrating a plurality of objects displayed on an electronic device according to various embodiments of the present disclosure;
FIG. 5B is a view illustrating control of at least a part of displayed information when an electronic device is bent according to various embodiments of the present disclosure;
FIG. 6A is a view illustrating an image displayed on an electronic device according to various embodiments of the present disclosure;
FIG. 6B is a view illustrating control of display of an image when an electronic device is bent according to various embodiments of the present disclosure;
FIG. 7 is a flowchart illustrating an operation for controlling a display in an electronic device according to various embodiments of the present disclosure; and
FIG. 8 is a block diagram of an electronic device according to various embodiments of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

An electronic device according to the present disclosure may be a device with display control capabilities. For example, the electronic device may be at least one of a smart phone, a tablet personal computer (PC), a mobile phone, a video phone, an e-Book reader, a desktop PC, a laptop PC, a Netbook computer, a personal digital assistant (PDA), a portable multimedia player (PMP), an MP3 player, a mobile medical equipment, a camera, a wearable device (for example, a head-mounted device (HMD) such as electronic glasses, electronic clothes, an electronic bracelet, an electronic necklace, an electronic Appcessory, an electronic tattoo, or a smart watch).

According to some embodiments, an electronic device may be a smart home appliance with display control capabilities. For example, the smart home appliance may be at least one of a television (TV), a digital versatile disk (DVD) player, audio equipment, a refrigerator, an air conditioner, a vacuum cleaner, an oven, a micro oven, a washer, an air purifier, a set-top box, a TV box (for example, Samsung HomeSync™, Apple TV™, Google TV™, or the like), a game console, an electronic dictionary, an electronic key, a camcorder, an electronic picture frame, and the like.

According to some embodiments, an electronic device may be at least one of a medical device (for example, a magnetic resonance angiography (MRA) device, a magnetic resonance imaging (MRI) device, a computed tomography (CT) device, an imaging device, an ultrasonic device, or the like), a navigation device, a global positioning system (GPS) receiver, an event data recorder (EDR), a flight data recorder (FDR), an automotive infotainment device, a naval electronic device (for example, a naval navigation device, a gyroscope, a compass, or the like), an avionic electronic device, a security device, an in-vehicle head unit, an industrial or consumer robot, an automatic teller machine (ATM) in a financial facility, a point of sales (POS) device in a shop, and the like.

According to some embodiments, an electronic device may be at least one of furniture, part of a building/structure, an electronic board, an electronic signature receiving device, a projector, or various measuring devices (for example, water, electricity, gas or electro-magnetic wave measuring devices), that include display control functionality. An electronic device according to the present disclosure may be one or a combination of two or more of the foregoing devices. In addition, it will be apparent to one having ordinary skill in the art that an electronic device according to the present disclosure is not limited to the foregoing devices.

Now a description will be given of an electronic device according to various embodiments of the present disclosure with reference to the attached drawings. The term user used in various embodiments of the present disclosure may refer to a person or device using an electronic device (for example, an artificial intelligence electronic device).

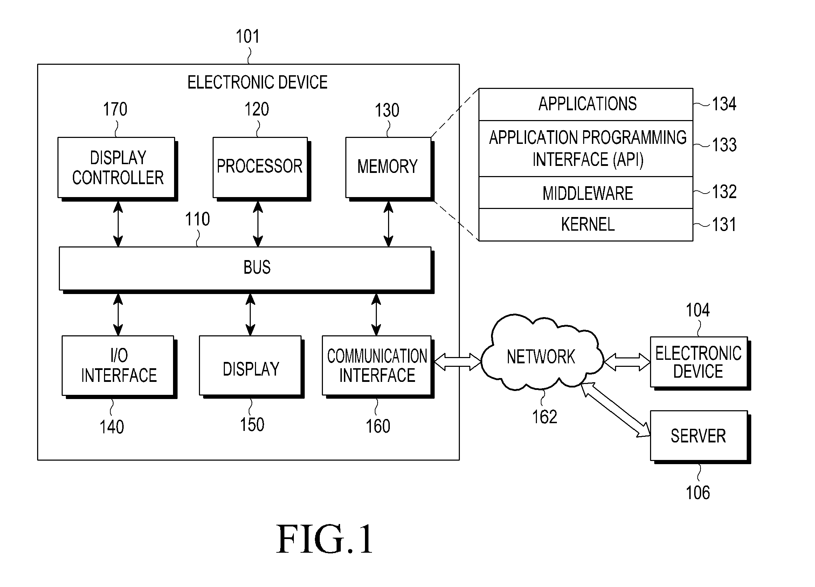

FIG. 1 illustrates a network environment including an electronic device according to various embodiments of the present disclosure.

Referring to FIG. 1, an electronic device 101 may include a bus 110, a processor 120, a memory 130, an input/output (I/O) interface 140, a display 150, a communication interface 160, and a display controller 170.

The bus 110 may be a circuit that interconnects the foregoing components and allows communication (for example, transmits control messages) between the foregoing components.

The processor 120 may, for example, receive instructions from other components (for example, the memory 130, the I/O interface 140, the display 150, the communication interface 160, or the display controller 170), interpret the received instructions, and execute computation or data processing according to the interpreted instructions.

The memory 130 may, for example, store instructions or data that are received from or generated by other components (for example, the memory 130, the I/O interface 140, the display 150, the communication interface 160, or the display controller 170). For example, the memory 130 may include programming modules such as a kernel 131, a middleware 132, an application programming interface (API) 133, or an application 134. Each of the foregoing programming modules may include a combination of at least two of software, firmware, or hardware.

The kernel 131 may control or manage system resources (for example, the bus 110, the processor 120, or the memory 130) used in executing operations or functions implemented in other programming modules such as, for example, the middleware 132, the API 133, or the application 134. Also, the kernel 131 may provide an interface for allowing the middleware 132, the API 133, or the application 134 to access individual components of the electronic device 101 and control or manage the individual components of the electronic device 101.

The middleware 132 may be a medium through which the kernel 131 may communicate with the API 133 or the application 134 to transmit and receive data. Also, the middleware 132 may control (for example, scheduling or load balancing) work requests by one or more applications 134 by, for example, assigning priorities for using system resources (for example, the bus 110, the processor 120, or the memory 130) of the electronic device 101 to the one or more applications 134.

The API 133 is an interface through which the application 134 controls functions provided by the kernel 131 or the middleware 132. For example, the API 133 may include at least one interface or function (for example, command) for file control, window control, video processing, character control, or the like.

According to various embodiments, the application 134 may include an short message service (SMS)/multimedia message service (MMS) application, an email application, a calendar application, an alarm application, a health care application (for example, an exercise amount or blood sugar level measuring application), or an environmental information application (for example, an application that provides atmospheric pressure, humidity, or temperature information). Additionally or alternatively, the application 134 may be an application associated with information exchange between the electronic device 101 and an external electronic device (for example, an electronic device 104). The application associated with the information exchange may include, for example, a notification relay application that provides the external electronic device with a certain type of information, or a device management application that manages the external electronic device.

For example, the notification relay application may include a functionality that provides notification information generated by other applications at the electronic device 101 (for example, an SMS/MMS application, an email application, a health care application, or an environmental information application) to an external electronic device (for example, the electronic device 104). Additionally or alternatively, the notification relay application may provide, for example, notification information received from an external electronic device (for example, the electronic device 104) to a user. The device management application may manage, for example, enabling or disabling of functions associated with at least a part of an external electronic device in communication with the electronic device 101, such as the electronic device 104, (for example, turn-on or turn-off of the electronic device itself or one or more components of the electronic device or control of brightness (or resolution) of a display of the external electronic device), or may manage (for example, install, delete, or update) an application operated at, or a service (for example, a voice call service or a messaging service) provided by the external electronic device.

According to various embodiments, the application 134 may include, for example, one or more applications that are determined according to a property (for example, an electronic device type) of the external electronic device (for example, the electronic device 104). For example, if the external electronic device is a digital audio player, the application 134 may include one or more applications related to music playback. In another example, if the external electronic device is a mobile medical device, the application 134 may be a health care-related application. According to an embodiment, the application 134 may include at least one of an application preloaded at the electronic device 101 or an application received from an external electronic device (for example, a server 106 or the electronic device 104).

The I/O interface 140, for example, may receive an instruction or data from a user via an I/O device (for example, a sensor, a keyboard, or a touch display) and transmit the received instruction or data to the processor 120, the memory 130, the communication interface 160, or the display controller 170 via the bus 110. For example, the I/O interface 140 may provide data associated with a user touch input received via a touch display to the processor 120. Also, the I/O interface 140 may, for example, output instructions or data received via the bus 110 from the processor 120, the memory 130, the communication interface 160, via an I/O device (for example, a speaker or a display). For example, the I/O interface 140 may output voice data processed using the processor 120, via a speaker.

The display 150 may display various types of information (for example, multimedia or text data) to the user.

The communication interface 160 may provide communication between the electronic device 101 and one or more external electronic devices (for example, the electronic device 104 or the server 106). For example, the communication interface 160 may communicate with the external electronic device by establishing a connection with the network 162 using wireless or wired communication. The wireless communication may be at least one of, for example, wireless fidelity (Wi-Fi), bluetooth (BT), near field communication (NFC), global positioning system (GPS), or cellular communication (for example, long term evolution (LTE), LTE-advanced (LTE-A), code division multiple access (CDMA), wideband CDMA (WDCMA), universal mobile telecommunication system (UMTS), wireless broadband (WiBro), or global system for mobile communication (GSM)). The wired communication may be at least one of, for example, universal serial bus (USB), high definition multimedia interface (HDMI), recommended standard 232 (RS-232), or plain old telephone service (POTS).

According to an embodiment, the network 162 may be a telecommunications network. The telecommunications network may include at least one of, for example, a computer network, the Internet, the Internet of Things, or a telephone network. According to an embodiment, a protocol (for example, transport layer protocol, data link layer protocol, or physical layer protocol) for communication between the electronic device 101 and an external electronic device may be supported by, for example, at least one of the application 134, the API 133, the middleware 132, the kernel 131, or the communication interface 160.

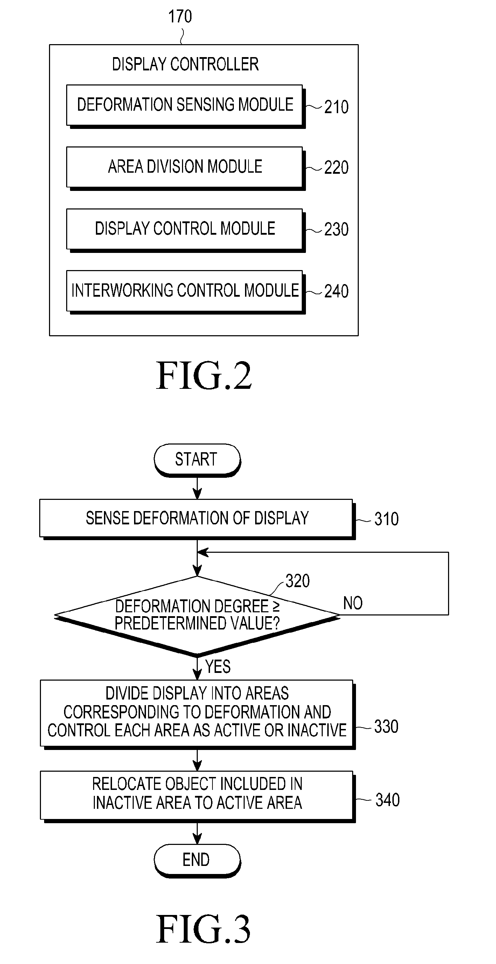

The display controller 170 may process at least a part of information received from other components (for example, the processor 120, the memory 130, the I/O interface 140, or the communication interface 160) and provide the processed information to the user in various manners. For example, the display controller 170 may control at least a part of functions of the electronic device 101 using the processor 120 or independently of the processor 120, so that the electronic device 101 may operate in conjunction with another electronic device (for example, the electronic device 104 or the server 106). The display controller 170 will be further described later with reference to FIGS. 2 to 8.

The display controller 170 may sense deformation of the display, compare the degree of the sensed deformation with a predetermined value, divide at least a part of the display based on a result of the comparison, determine at least a part of divided areas of the display as active or inactive, and control at least part of information displayed in at least a part of the divided areas. If the sensed deformation degree is different from the predetermined value, the display controller 170 may divide the display into at least two areas. The display controller 170 may sense the type of the deformation of the display and determine areas into which the display is divided or the number of the areas according to the deformation type. The type of deformation can be one of a user bending the electronic device with his or her hand, bending in a cradle, and automatically bending at a predetermined angle. The display controller 170 may determine the at least one divided area based on at least one of sensing through at least one sensor, a deformation degree of the display, a deformed direction of the display, and a deformed angle of the display. The display controller 170 may relocate an object included in at least one inactive area to another area. The display controller 170 may determine whether at least one of objects included in an inactive area responds to an input on the display. In the presence of at least one object in response to the input, the display controller 170 may relocate the at least one object to an active area. The display controller 170 may change at least one of the position, shape, color, size, configuration, effect, and transparency of the at least one object. The display controller 170 may determine an area beyond selection of a finger of a hand gripping the display as inactive or may divide the display into at least two areas by determining a boundary formed by deformation of the display 150.

FIG. 2 is a block diagram of a display controller according to various embodiments of the present disclosure.

Referring to FIG. 2, the display controller 170 according to various embodiments of the present disclosure may include at least one of a deformation sensing module 210, an area division module 220, a display control module 230, and an interworking control module 240.

According to an embodiment, the display controller 170 may sense deformation of the display 150. The display controller 170 may divide an area of the display 150. The display controller 170 may sense deformation of the display 150, compare the degree of the sensed deformation of the display 150 with a predetermined value, divide at least a part of the display 150 based on a result of the comparison, determine at least a part of divided areas of the display 150 as active area or inactive area, and control at least part of information displayed in at least a part of the divided areas. An active area refers to an area which triggers a function corresponding to an input sensed in the area, whereas an inactive area refers to an area which does not trigger a function corresponding to an input sensed in the area. For the convenience of description, an area triggering execution of a function corresponding to an input sensed from the display may be referred to as an active area, whereas an area that does not trigger execution of a function corresponding to an input sensed from the display may be referred to as an inactive area.

According to an embodiment, the deformation sensing module 210 may sense deformation of the display 150. The display 150 may be deformed freely and kept bent in a hand or on a cradle. The deformation sensing module 210 may sense and determine deformation of the display 150. The deformation sensing module 210 may sense or determine at least one of a deformation degree, a deformation direction, and a deformation angle of the display 150.

According to an embodiment, the area division module 220 may compare a deformation degree of the display 150 with a predetermined value (or a threshold) and divide the display 150 in correspondence with the sensed deformation of the display 150. The area division module 220 may compare the deformation degree of the display 150 with a predetermined value(or a predetermined degree) and divide (or determine) at least one area from at least a part of the display 150 based on a result of the comparison. The area division module 220 may compare the deformation degree of the display 150 with the predetermined value and divide at least a part of the display 150 based on a result of the comparison. The at least one part of the display 150 may be divided with respect to a boundary formed by the deformation. The area division module 220 may determine divided areas according to the type of the sensed deformation. The display 150 may be divided into two areas according to the type of the deformation of the display 150. The divided areas may be distinguished with respect to a boundary formed by the deformation of the display 150.

According to an embodiment, the display control module 230 may control each of divided areas as active area or inactive area and control display of each divided area. The display control module 230 may control at least a part of each divided area as active area or inactive area and control display of the divided areas accordingly. The display control module 230 may relocate information or data displayed in at least a partial area operating as inactive to a partial area operating as active. The display control module 230 may deactivate at least a partial area determined as inactive so that at least one of a touch input and a hovering input may not be sensed in the partial area. Upon sensing deformation of the display 150 through at least one sensor of a sensor module, the display control module 230 may determine each divided area or at least a part of each divided area as active area or inactive area.

According to an embodiment, the interworking control module 240 may control interworking between at least two of the deformation sensing module 210, the area division module 220, and the display control module 230, which are included in the display controller 170. The interworking control module 240 may interwork with the bus 110, the processor 120, the memory 130, the I/O interface 140, the display 150, and the communication interface 160 of the electronic device 101.

According to an embodiment, an operation of the display controller 170 or an operation of at least one of the deformation sensing module 210, the area division module 220, the display control module 230, and the interworking control module 240 which are included in the display controller 170 may be performed in the at least one module, and in the processor 120 of the electronic device 101.

FIG. 3 is a flowchart illustrating an operation for controlling a display of an electronic device according to various embodiments of the present disclosure.

Referring to FIG. 3, an operation for controlling a display of an electronic device according to various embodiments of the present disclosure will be described below.

According to an embodiment, the display controller 170 may sense deformation of the display in operation 310. The deformation sensing module 210 of the display controller 170 may sense deformation of the display 150. The deformation sensing module 210 may sense and determine a deformation degree of the display 150. The deformation sensing module 210 may analyze at least one of a deformation direction, degree, and force of the display 150.

According to an embodiment, the display may be divided into areas in correspondence with the sensed deformation in operation 320. According to an embodiment, if the degree of the sensed deformation is equal to or larger than a predetermined value, the display may be divided into areas corresponding to the sensed deformation and each of the divided areas may be controlled as active area or inactive area. The area division module 220 may compare the deformation degree of the display 150 with the predetermined value and divide the display 150 into at least two areas. The area division module 220 may further define at least a partial area of each divided area and determine the at least partial area as active area or inactive area. The area division module 220 may activate area or deactivate area divided from each divided area while each divided area is operated as active area or inactive area. An active area is an area that triggers execution of a function corresponding to an input sensed on the display, whereas an inactive area is an area that does not trigger execution of a function corresponding to an input sensed on the display. The area division module 220 may control an inactive area so that at least part of information displayed in the inactive area may be relocated (or reconfigured) in an active area. The area division module 220 may determine divided areas according to the type of sensed deformation. The divided areas may be determined with respect to a boundary formed by the deformation of the display 150.

According to an embodiment, displayed information may be reconfigured in operation 330. The display control module 230 may relocate an object included in an inactive area to an active area in operation 340. The relocation may include changing at least one of the position, shape, color, size, configuration, effect, and transparency of the at least one object. The display control module 230 may control each divided area as active area or inactive area and control display in the divided areas. The display control module 230 may control at least a part of each divided area to operate as active area or inactive area. The display control module 230 may move information, data, and an object displayed in at least a partial area operated as inactive to at least one area or at least a partial area operated as active. The display control module 230 may control or adjust at least one of the size, color, or configuration of at least one of information, data, and an object displayed in at least a partial area operated as inactive area. The display control module 230 may relocate the control or adjustment result to at least a partial area operated as active area. At least one of the size, color, and configuration may be controlled based on at least one of the deformation direction, angle, and degree of the display. Upon sensing an input corresponding to movement of an object, data, or information from an active area to an inactive area or from an inactive area to an active area after the relocation is completed, the display control module 230 may move the object, data, or information from the active area to the inactive area or from the inactive area to the active area and display a result of the movement on the display. An active area and an inactive area may be switched to an inactive area and an active area, respectively by user selection.

In a method for controlling a display of an electronic device according to an embodiment, deformation of a display may be sensed, the degree of the sensed deformation may be compared with a predetermined value, at least a part of the display may be divided based on a result of the comparison, at least a part of divided areas may be determined as active area or inactive area, and at least part of information displayed in at least a part of the divided areas may be controlled. The division may include division of the display into at least two areas, if the sensed deformation degree is different from the predetermined value. The division may include determining at least one area based on the type of the sensed deformation. The at least partial area may be divided with respect to a boundary formed by the deformation. At least one of the divided areas may be determined as active area or inactive area based on at least one of sensing of at least one sensor, the deformation degree of the display, the deformation direction of the display, and the deformation angle of the display. The at least one sensor may include a sensor that senses a hand gripping the display, a sensor that senses a first spot touched on the display after the display is gripped, and a sensor that senses shaking of the display after the display is gripped. The operation for controlling at least part of information may include relocating an object included in the at least one area to another area. The operation for controlling at least part of information may include determining the presence of at least one object in response to an input on the display among objects included in an area determined as inactive area and relocating the at least one object in response to the input to an active area. The relocation to the active area may include changing at least one of the position, shape, color, size, configuration, effect, and transparency of the at least one object. The determination may include sensing an input for determining at least a part of the divided areas as active area or inactive area and determining the at least part of the divided areas as active area or inactive area according to the sensed input. The input may be generated by at least one of gripping the display, applying a first touch input and hovering input after the display is gripped, and shaking the display after the display is gripped. The method of the present disclosure may further include determining an area beyond selection of a finger of a hand gripping the display, as inactive area. Activation may mean sensing an input on a screen or performing an operation associated with the sensed input, whereas deactivation may mean non-sensing of an input on a screen or not performing an operation associated with the input.

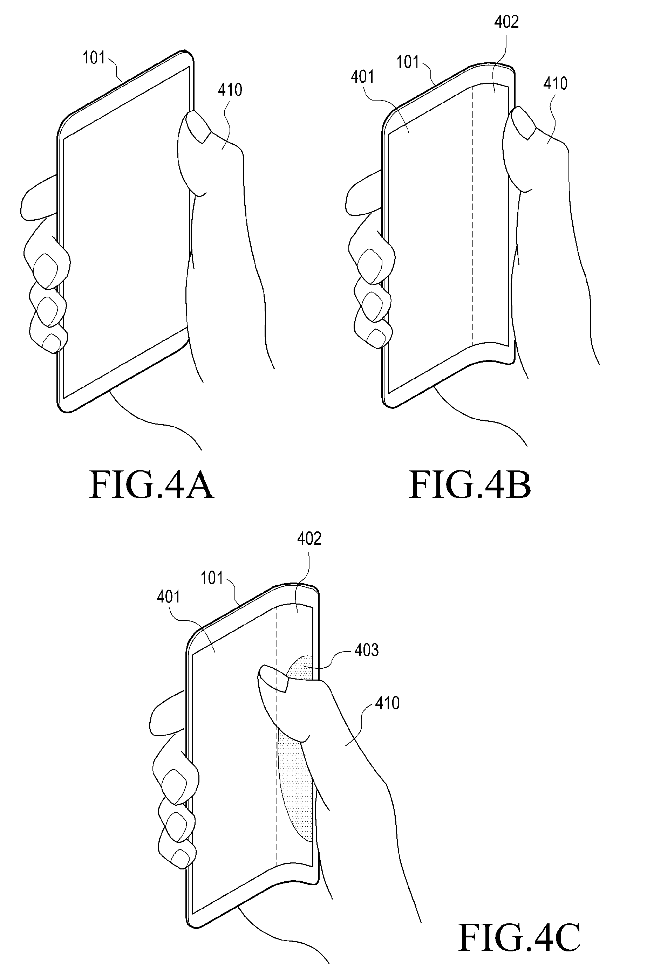

FIG. 4A is a view illustrating an electronic device gripped in a hand according to various embodiments of the present disclosure.

FIG. 4B is a view illustrating division of a display when an electronic device is bent according to various embodiments of the present disclosure.

FIG. 4C is a view illustrating at least a part of a display which is divided and an operation triggered by an input according to various embodiments of the present disclosure.

Referring to FIGS. 4A to 4C, an example of dividing at least a part of a display and applying an input to a divided area of the display if an electronic device is bent according to various embodiments of the present disclosure will be described below. While a user bends the electronic device with his or her hand in FIGS. 4A, 4B, and 4C, this is purely exemplary. It is apparent that the present disclosure is also applicable to a case where an electronic device is bent in a cradle or is automatically bent at a predetermined angle. When the electronic device or the cradle is tilted, the display may also be divided into at least two areas.

Referring to FIG. 4A, a user may grip the electronic device 101 with the user's right hand 410 according to an embodiment. The user may grip the electronic device 101 with the left hand or both hands depending on the size of the electronic device 101. The electronic device 101 may determine whether it has been gripped, through at least one sensor. The sensor may be at least one of a touch sensor, a proximity sensor, a temperature sensor, a gyro sensor, and a pressure sensor. Also, the sensor may be at least one of a sensor that senses a hand gripping a display, a sensor that senses a first spot touched on a display after the display is gripped, and a sensor that senses shaking of a display after the display is gripped. The electronic device 101 may sense the grip of the electronic device 101 through at least one of the aforementioned sensors.

Referring to FIG. 4B, after the user grips the electronic device 101 with the right hand 410, the user may bend the electronic device 101 with the force of the gripping by the right hand 410 according to an embodiment. The electronic device 101 may be or may include a flexible display. The flexible display may be curved or bent under an external force. Also, the flexible display may be deformed under an external force. As illustrated in FIG. 4B, if the user grips the electronic device 101 with the right hand 410 and then applies a force to the electronic device 101, the electronic device 101 may be bent. The electronic device (or the flexible display) may be divided into at least two areas in correspondence with deformation of the electronic device (or the flexible display). Additionally, at least a part of the electronic device or at least a part of each area of the electronic device may be controlled to be activated or deactivated. For example, if the user bends the electronic device 101 with the gripping right hand 410, the electronic device 101 may be divided into two areas, namely first area 401 and second area 402 with respect to a boundary formed by the bending force. The first area 401 may be controlled to be activated and the second area 402 may be controlled to be deactivated.

Referring to FIG. 4C, the first area 401 may be controlled to be activated and the second area 402 may be controlled to be deactivated according to an embodiment. In another embodiment, a part 403 of the second area 402 may be controlled to be deactivated. The part 403 of area 402 may include an area beyond touch of a thumb.

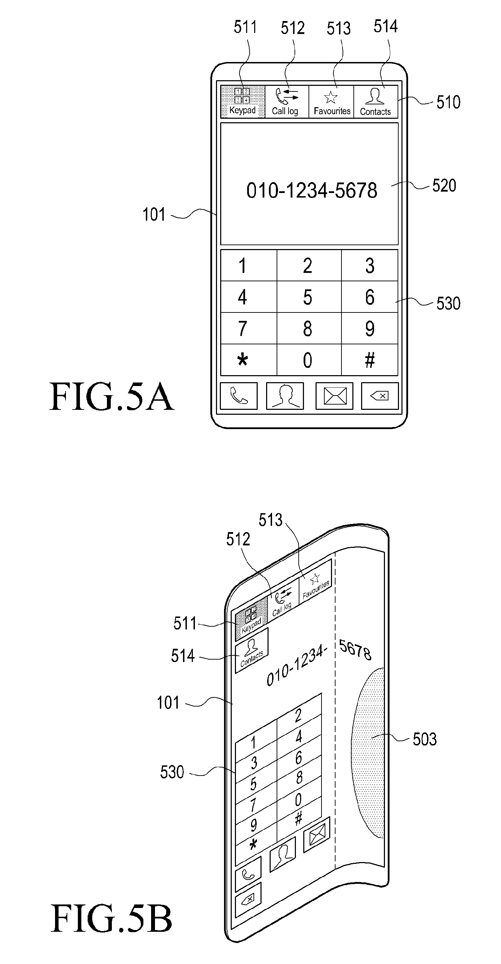

FIG. 5A is a view illustrating a plurality of objects displayed on an electronic device according to various embodiments of the present disclosure.

FIG. 5B is a view illustrating control of at least part of displayed information when an electronic device is bent according to various embodiments of the present disclosure.

Referring to FIGS. 5A and 5B, a view illustrating control of a displayed object when an electronic device is bent according to various embodiments of the present disclosure will be described below.

Referring to FIG. 5A, the electronic device 101 may display at least one object according to an embodiment. Each object may be displayed at least in a partial area and an input in or near the area may be sensed or received. For example, if the electronic device 101 receives a phone number to be dialed, a first area 510 may include a plurality of menus to provide a call. The first area 510 may include at least one of a menu 511 for displaying a keypad, a menu 512 for displaying a call log, a menu 513 for setting frequently used phone numbers, or a menu 514 for searching for a contact. The first area 510 may include many other necessary or required menus according to application types. A second area 520 may display a number input through a keypad 530. The keypad 530 may be used for receiving a phone number to be dialed and various icons such as a voice call icon, a video call icon, and an icon for deleting an input number. At least a part of the first area 510 or the keypad 530 may be controlled to be activated, for sensing an input. The second area 520 may be controlled to be deactivated so that an input number may be displayed and an input in or near the second area 520 may not be sensed.

If the electronic device 101 is bent in FIG. 5A, the electronic device 101 may control display of an object as illustrated in FIG. 5B. If the electronic device 101 senses its deformation under an external force, an area of the electronic device 101 may be divided into at least two areas in correspondence with the sensed external force. If the electronic device 101 senses its deformation under an external force, each divided area of the electronic device 101 may be further divided into at least partial areas. Each divided area or at least a part of each divided area may be controlled to be activated or deactivated. If the electronic device 101 is divided into two areas, each area may be controlled to be activated or deactivated. For example, if the electronic device 101 is divided into two areas, an object for which a touch input or a hovering input has been sensed before the electronic device 101 is bent may be relocated and displayed in an active area. Each of the plurality of menus 511, 512, 513, and 514 is a menu for which a touch input or a hovering input may be sensed and which may be relocated to an active area. For example, if the electronic device 101 is bent and thus divided into two areas, the menus 511, 512, and 513 located in an active area with respect to a boundary formed by the bending may be kept displayed as they are, whereas the menu 514 located in an inactive area may be relocated to an active area due to the bending of the electronic device 101. A plurality of icons including the keypad 530 may be relocated to the active area, along with the foregoing menu. A phone number (for example, 010-1234-5678) input through the keypad 530 may be kept displayed as it is, even when the electronic device 101 is bent. The phone number (for example, 010-1234-5678) input through the keypad 530 may be relocated to an inactive area, in a bent state of the electronic device 101. In the bent state of the electronic device 101, a right area or at least a part 503 of the right area may be controlled to be deactivated. The part 503 of the right area may include an area to which at least one of a touch input and a hovering input may not be applied while the electronic device 101 is bent.

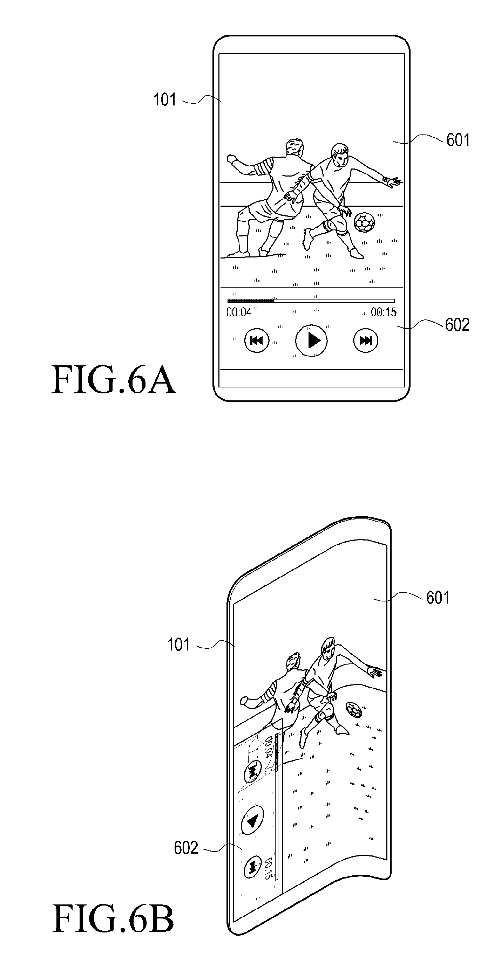

FIG. 6A is a view illustrating an image displayed on an electronic device according to various embodiments of the present disclosure.

FIG. 6B is a view illustrating control of display of an image when an electronic device is bent according to various embodiments of the present disclosure.

Referring to FIGS. 6A and 6B, a view illustrating control of display of an image when an electronic device is bent according to various embodiments of the present disclosure will be described below.

Referring to FIGS. 6A and 6B, the electronic device 101 may display an image (for example, a still image or a video) according to an embodiment. The electronic device 101 may display an image 601 in at least a partial area of the electronic device 101. The electronic device 101 may display a menu 602 to control an image displayed in the at least partial area of the display. The display may or may not sense an input in or near an area in which an image is reproduced. The menu 602 may sense at least one of a touch input and a hovering input. For example, if the electronic device 101 with the image 601 displayed on it is bent, the image 601 may be displayed on the bent electronic device 101 as illustrated in FIG. 6B. The menu 602 may be relocated and displayed in an active area as the electronic device 101 is bent.

While FIGS. 4A to 6B illustrate a case where a user grips and bends the electronic device 101 in the user's right hand, this is purely exemplary. An active area and an inactive area defined if the electronic device 101 is bent with the right hand may be an inactive area and an active area respectively when the electronic device 101 is bent with the left hand. If the electronic device is bent in any other manner than with the right or left hand, the electronic device may also be divided into at least two areas and each area may be controlled as active or inactive. Further, the electronic device may be deformed freely, may be kept bent on a cradle or the like, or may be automatically bent at a predetermined angle. The display may be divided into at least two areas and each area may be controlled as active area or inactive area, under the above conditions.

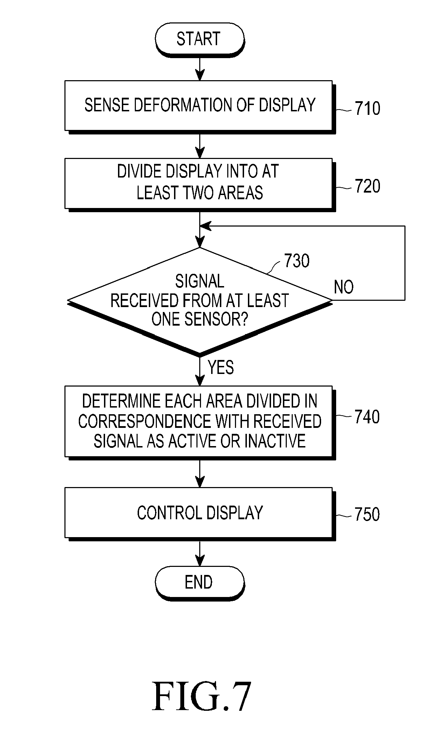

FIG. 7 is a flowchart illustrating an operation for controlling a display in an electronic device according to various embodiments of the present disclosure.

An operation for controlling a display in an electronic device according to various embodiments of the present disclosure will be described in detail with reference to FIG. 7.

According to an embodiment, the display controller 170 may sense deformation of the display in operation 710. The deformation sensing module 210 of the display controller 170 may sense deformation of the display. The deformation sensing module 210 may sense and determine a deformation degree of the display 150. The deformation sensing module 210 may analyze at least one of a deformation direction, degree, and angle of the display 150.

According to an embodiment, the display controller 170 may divide the display into at least two areas in correspondence with the sensed deformation in operation 720. The area division module 220 of the display controller 170 may divide the display into at least two areas. The area division module 220 may divide the display into at least one area in correspondence with sensed deformation of the display. If the degree of the sensed deformation is equal to or larger than a predetermined value or if the degree of the sensed deformation exceeds a predetermined value, the area division module 220 may divide the display into at least two areas. If the degree of the sensed deformation is less than the predetermined value or if the degree of the sensed deformation is equal to or less than the predetermined value, the area division module 220 may not divide the display. The area division module 220 may compare a deformation degree of the display with a predetermined value and divide the display in correspondence with the sensed deformation of the display. The area division module 220 may compare a deformation degree of the display with a predetermined value and divide the display into at least two areas.

According to an embodiment, upon receipt of a signal from at least one sensor in operation 730, the display controller 170 may determine each divided area or at least a part of each area as active or inactive in correspondence with sensing of the at least one sensor in operation 740. Upon receipt of a signal from at least one sensor, the display control module 230 may determine each divided area or at least a part of each area as active or inactive in correspondence with sensing of the at least one sensor. Upon sensing deformation of the display, at least one of the display controller 170 and the display control module 230 may divide the display into at least two areas. Upon sensing at least one of a touch input and a hovering input in at least one divided area or a part of the display, at least one of the display controller 170 or the display control module 230 may determine whether to control the sensed at least one area as active area or inactive area. Upon sensing at least one of a touch input and a hovering input in a part of the display, at least one of the display controller 170 or the display control module 230 may determine whether to control an area having a predetermined radius from a sensed point as active area or inactive area. For example, upon sensing an input in at least one divided area or at least a part of the display, at least one of the display controller 170 or the display control module 230 may control the at least one sensed area as active area. The divided areas may be determined with respect to a boundary formed by deformation of the display 150.

According to an embodiment, at least one of the display controller 170 or the display control module 230 may control display of an object displayed on the display through a received or sensed signal in operation 750. At least one of the display controller 170 and the display control module 230 may relocate and display at least one of information, data, and an object displayed in at least a partial area operated as inactive to at least one area or at least a partial area operated as active.

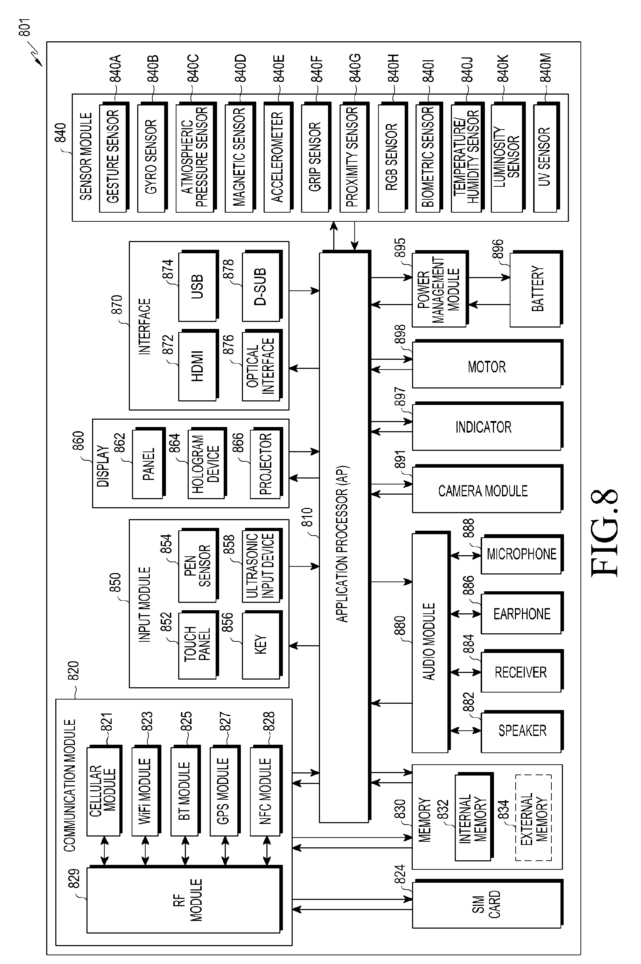

FIG. 8 is a block diagram of an electronic device according to various embodiments of the present disclosure. For example, the electronic device may be the whole or part of the electronic device 101 illustrated in FIG. 1.

Referring to FIG. 8, an electronic device 801 may include one or more application processors (APs) 810, a communication module 820, a subscriber identification module (SIM) card 824, a memory 830, a sensor module 840, an input device 850, a display 860, an interface 870, an audio module 880, a camera module 891, a power management module 895, a battery 896, an indicator 897, and a motor 898.

The AP 810 may control one or more hardware or software components that are connected to the AP 810 by executing an operating system (OS) or an application program and may perform processing or computation of various types of data including multimedia data. The AP 810 may be implemented, for example, as a system-on-chip (SoC). According to an embodiment, the AP 810 may further include a graphics processing unit (GPU; not shown).

The communication module 820 (for example, the communication interface 160) may transmit and receive data in communications between the electronic device 801 (for example, the electronic device 101) and other electronic devices (for example, the electronic device 104 or the server 106). According to an embodiment, the communication module 820 may include a cellular module 821, a Wi-Fi module 823, a BT module 825, a GPS module 827, an NFC module 828, and a radio frequency (RF) module 829.

The cellular module 821 may provide services such as, for example, voice call, video call, SMS, or the Internet, via a communication network (for example, LTE, LTE-A, CDMA, WCDMA, UMTS, WiBro, or GSM). The cellular module 821 may identify and authenticate electronic devices within a communication network, using a SIM card (for example, the SIM card 824). According to an embodiment, the cellular module 821 may perform at least a part of the functionalities of the AP 810. For example, the cellular module 821 may perform at least a part of multimedia control functionality.

According to an embodiment, the cellular module 821 may include a communication processor (CP). The cellular module 821 may, for example, be implemented as an SoC. Although components such as the cellular module 821 (for example, the CP), the memory 830, or the power management module 895 are shown in FIG. 8 as configured separately from the AP 810, the AP 810 may include, or be integrated with, one or more of the foregoing components (for example, the cellular module 821).

According to an embodiment, the AP 810 or the cellular module 821 (for example, a CP) may process instructions or data received from at least one of a non-volatile memory or other components by loading the instructions or the data in a volatile memory. Also, the AP 810 or the cellular module 821 may store at the non-volatile memory at least one of data received from at least one of other components or data generated by at least one of the other components.

Each of the Wi-Fi module 823, the BT module 825, the GPS module 827, and the NFC module 828 may include, for example, a processor that may process data received or transmitted by the respective modules. Although FIG. 8 shows the cellular module 821, the Wi-Fi module 823, the BT module 825, the GPS module 827, and the NFC module 828 as separate blocks, any combination (for example, two or more) of the cellular module 821, the Wi-Fi module 823, the BT module 825, the GPS module 827, and the NFC module 828 may be included in an integrated chip (IC) or an IC package according to an embodiment. For example, at least some of the processors corresponding to the respective cellular module 821, the Wi-Fi module 823, the BT module 825, the GPS module 827, or the NFC module 828 may be implemented as a single SoC. For example, a CP corresponding to the cellular module 821 and a Wi-Fi processor corresponding to the Wi-Fi module 823 may be implemented as a single SoC.

The RF module 829 may transmit and receive data, for example, RF signals. While not shown, the RF module 829 may include a transceiver, a power amplifier module (PAM), a frequency filter, or a low noise amplifier (LNA). The RF module 829 may further include one or more components for transmitting and receiving electro-magnetic (EM) waves in free space, such as conductors or conductive wires. Although FIG. 8 shows that the cellular module 821, the Wi-Fi module 823, the BT module 825, the GPS module 827, and the NFC module 828 share the single RF module 829, at least one of the cellular module 821, the Wi-Fi module 823, the BT module 825, the GPS module 827, or the NFC module 828 may transmit and receive RF signals via a separate RF module according to an embodiment.

The SIM card 824 may be a card including a SIM, and may be configured to be inserted into a slot disposed at a specified location of the electronic device. The SIM card 824 may include a unique identifier (for example, integrated circuit card IDentifier (ICCID)) or subscriber information (for example, international mobile subscriber identity (IMSI)).

The memory 830 may include an internal memory 832 or an external memory 834. The internal memory 832 may be at least one of, for example, a volatile memory (for example, dynamic RAM (DRAM), static RAM (SRAM), or synchronous dynamic RAM (SDRAM)) or a non-volatile memory (for example, one time programmable ROM (OTPROM), programmable ROM (PROM), erasable and programmable ROM (EPROM), electrically erasable and programmable ROM (EEPROM), mask ROM, flash ROM, NAND flash memory, or NOR flash memory).

According to an embodiment, the internal memory 832 may be a solid state drive (SSD). The external memory 834 may be, for example, a flash drive (for example, a compact flash (CF) drive, a secure digital (SD), a micro secure digital (micro-SD), a mini secure digital (mini-SD), an extreme digital (xD), or a Memory Stick). The external memory 834 may be operatively coupled to the electronic device 801 via various interfaces. According to an embodiment, the electronic device 801 may further include recording devices (or recording media) such as a hard disk drive (HDD).

The sensor module 840 may measure physical properties or detect operational states associated with the electronic device 801, and convert the measured or detected information into electric signals. The sensor module 840 may include at least one of, for example, a gesture sensor 840A, a gyro sensor 840B, an atmospheric pressure sensor 840C, a magnetic sensor 840D, an accelerometer 840E, a grip sensor 840F, a proximity sensor 840G, a color sensor 840H (for example, a red, green, blue (RGB) sensor), a biometric sensor 840I, a temperature/humidity sensor 840J, a luminosity sensor 840K, or an ultra violet (UV) sensor 840M. The sensor module 102-40 may detect the operation state of the electronic device or measure physical properties and convert the detected or measured information into electrical signals. Additionally or alternatively, the sensor module 840 may include, for example, an electrical-nose sensor (not shown), an electromyography (EMG) sensor (not shown), an electroencephalogram (EEG) sensor (not shown), an infrared (IR) sensor (not shown), an iris sensor (not shown), or a fingerprint sensor. The sensor module 840 may further include a control circuit for controlling one or more sensors included therein.

The input device 850 may include a touch panel 852, a (digital) pen sensor 854, a key 856, or an ultrasonic input device 858. The touch panel 852 may detect a touch input using at least one of, for example, capacitive, resistive, infrared, or ultrasonic methods. The touch panel 852 may further include a control circuit. A capacitive-type touch panel may detect physical touch inputs or proximity inputs. The touch panel 852 may further include a tactile layer. Haptic feedback may be provided to the user using the tactile layer.

The (digital) pen sensor 854 may be implemented, for example, using methods identical to or similar to receiving a touch input from a user, or using a separate detection sheet. The key 856 may include, for example, a physical button, an optical key, or a keypad. The ultrasonic input device 858 may be a device configured to identify data by detecting, using a microphone (for example, a microphone 888), ultrasonic signals generated by a device capable of generating the ultrasonic signal. The ultrasonic input device 858 may detect data wirelessly. According to an embodiment, the electronic device 801 may receive a user input from an external device (for example, a computer or a server) connected to the electronic device 801 using the communication module 820.

The display 860 (for example, the display 150) may include a panel 862, a hologram device 864, or a projector 866. The panel 862 may be, for example, a liquid crystal display (LCD) or an active-matrix organic light-emitting diode (AM-OLED) display. The panel 862 may be configured to be, for example, flexible, transparent, or wearable. The panel 862 and the touch panel 852 may be implemented as a single module. The hologram device 864 may utilize the interference of light waves to provide a three-dimensional image in empty space. The projector 866 may provide an image by projecting light on a display. The display may be positioned, for example, inside or outside the electronic device 801. According to an embodiment, the display 860 may further include a control circuit for controlling the panel 862, the hologram device 864, or the projector 866.

The interface 870 may include, for example, a high-definition multimedia interface (HDMI) 872, a universal serial bus (USB) 874, an optical interface 876, or a D-sub 878. The interface 870 may be incorporated into, for example, the communication interface 160 illustrated in FIG. 1. Additionally or alternatively, the interface 870 may include, for example, a mobile high-definition link (MHL) interface, an SD/MultiMedia Card, or an Infrared Data Association (IrDA) interface.

The audio module 880 may encode/decode a voice into an electrical signal, and vice versa. At least a part of components of the audio module 880 may be incorporated in, for example, the I/O interface 140 illustrated in FIG. 1. The audio module 880 may process audio information input into, or output from, for example, a speaker 882, a receiver 884, an earphone 886, or the microphone 888.

The camera module 891 may capture still images or a video. According to an embodiment, the camera module 891 may include one or more image sensors (for example, a front sensor or a rear sensor), a lens (not shown), an image signal processor (ISP, not shown), or a flash (for example, a light emitting diode (LED) or a Xenon lamp, not shown).

The power management module 895 may manage power of the electronic device 801. While not shown, the power management module 895 may include, for example, a power management integrated circuit (PMIC), a charger IC, or a battery or fuel gauge.

The PMIC may be disposed, for example, in an IC or an SoC semiconductor. The charging method for the electronic device 801 may include wired or wireless charging. The charger IC may charge a battery, or prevent excessive voltage or excessive current from a charger from entering the electronic device 801. According to an embodiment, the charger IC may include at least one of a wired charger IC or a wireless charger IC. The wireless charger IC may be, for example, a magnetic resonance type, a magnetic induction type or an electromagnetic wave type, and may include additional circuits for wireless charging, such as a coil loop, a resonance circuit, or a rectifier.

The battery gauge may measure, for example, a charge level, a voltage while charging, or temperature of the battery 896. The battery 896 may store or generate electricity and supply power to the electronic device 801 using the stored or generated electricity. The battery 896 may include, for example, a rechargeable battery or a solar battery.

The indicator 897 may indicate one or more states (for example, boot status, message status, or charge status) of the electronic device 801 or a part of the electronic device 801 (for example, the AP 810). The motor 898 may convert an electrical signal into a mechanical vibration. While not shown, the electronic device 801 may include a device for supporting mobile TV (for example, a GPU). The device for supporting mobile TV may process media data compliant with, for example, digital multimedia broadcasting (DMB), digital video broadcasting (DVB), or media flow.

Each of components of an electronic device described above according to the present disclosure may include one or more components, and each component's name may vary according to the type of the electronic device. The electronic device according to the present disclosure may include at least one of the above-described components, and some may be omitted or additional components may be included. Also, some of the components of the hardware according to the present disclosure may be combined into a single entity and perform functions identical to those of the respective components before their combination.

The term "module" as used herein may include its ordinary meaning including, but not limited to, for example, a unit of one, or a combination of two or more, hardware, software or firmware. The term "module" may be used interchangeably with a term such as unit, logic, logical block, component, or circuit. A module may be the smallest unit for performing one or more functions, or a portion thereof. A module may be implemented mechanically or electronically. For example, a module according to the present disclosure may include at least one of a known or to-be-developed application-specific integrated circuit (ASIC) chip, field-programmable gate array (FPGA) or programmable logic device that perform certain operations.

According to various embodiments, at least a part of devices (for example, modules or their functions) or methods (for example, operations) according to the present disclosure may be implemented, for example, in the form of a programming module, as commands stored in a non-transitory computer-readable storage medium. When a command is executed by one or more processors (for example, the processor 120), the one or more processors may execute a function corresponding to the command. The non-transitory computer-readable storage medium may be, for example, the memory 130. At least a part of the programming module may be implemented (for example, executed) by the processor 120. At least a part of the programming module may include, for example, a module, a program, a routine, a set of instructions, and/or a process to execute one or more functions.

The non-transitory computer-readable recording medium may include any kind of hardware device configured specially to store a program command (for example, a programming module). Examples of the hardware device may include magnetic media such as a hard disk, floppy disk, and a magnetic tape, optical media such as a compact disc read only memory (CD-ROM) and a DVD, magneto-optical media such as a floptical disk, a ROM, a RAM, a flash memory, and the like. The program command may include a premium language code that can be executed in a computer using an interpreter as well as a mechanical code produced by a compiler. The above-mentioned hardware device may be implemented as one or more software modules to perform the operations of the present disclosure and vice versa.

A module or a programming module according to the present disclosure may include one or more of the above-described components, may omit a portion thereof, or may include additional components. Operations that are performed by a module, a programming module or other components according to the present disclosure may be processed in a serial, parallel, repetitive or heuristic manner, and some operations may be omitted or additional operations may be added.

According to various embodiments, a storage medium storing commands is provided. The commands are configured to allow at least one processor to perform at least one operation, when the commands are executed by the at least one processor. In a non-transitory computer-readable storage medium including a command for controlling a display of an electronic device, the at least one operation may include sensing deformation of a display, comparing a degree of the sensed deformation with a predetermined value, dividing at least a part of the display, determining at least a part of divided areas as active or inactive, and controlling at least part of information displayed in at least a part of the divided areas. If the degree of the sensed deformation is different from the predetermined value, the command may further include dividing the display into at least two areas and relocating and displaying an object included in the at least one area to another area.

As is apparent from the foregoing description, as an electronic device and method for controlling a display are provided according to various embodiments of the present disclosure, if an input is sensed in a deformed state of a flexible display that can sense an input in the electronic device, a malfunction probability can be reduced by setting an area with a highly probability of unintended input as inactive.

According to various embodiments of the present disclosure, since an object in an area with a high probability of unintended input is relocated to an active area in which input is enabled and displayed with an adjusted size, direction, configuration, shape, or the like, user convenience can be increased.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. A method for controlling a deformable display of an electronic device, the method comprising:
sensing (310) deformation of the deformable display;
comparing (320) a degree of the sensed deformation with a predetermined value;
dividing (330) at least a part of the deformable display based on a result of the comparison;
determining at least a part of divided areas to be an active area or inactive area; and
controlling at least part of information displayed in at least a part of the divided areas.

2. The method of claim 1, wherein the active area is an area that triggers execution of a function corresponding to an input sensed on the deformable display, whereas the inactive area is an area that does not trigger execution of a function corresponding to an input sensed on the deformable display.

3. The method of claim 1 or 2, wherein the dividing of the at least the part of the deformable display comprises determining at least one area based on a type of the sensed deformation.

4. The method of any one of the preceding claims, wherein the at least the part of the deformable display is divided with respect to a boundary formed by the deformation.

5. The method of any one of the preceding claims, wherein the determining of the at least the part of the divided areas to be the active area or inactive area comprises determining at least one divided area based on at least one of sensing of at least one sensor, the deformation degree of the deformable display, a deformation direction of the deformable display, and a deformation angle of the deformable display.

6. The method of any one of the preceding claims, wherein the controlling of the at least the part of the information comprises relocating (340) an object included in at least one area to another area and displaying the relocated object in the other area.

7. The method of any one of the preceding claims, wherein the controlling of the at least the part of the information comprises:
determining whether at least one of objects included in an area determined to be the inactive area is configured to respond to an input on the deformable display; and
relocating the at least one object in response to the input to the active area.

8. The method of any one of the preceding claims, wherein the determining of the at least the part of the divided areas to be the active area or inactive area comprises:
sensing an input that determines the at least the part of the divided areas to be the active area or inactive area; and
determining the at least part of the divided areas to be the active area or inactive area based on the sensed input,
wherein the input is generated by at least one of gripping the deformable display, a first touch input or a first hovering input after the deformable display is gripped, and shaking of the deformable display after the deformable display is gripped.

9. The method of any one of the preceding claims, further comprising determining an area which is not possible to select using a finger of a hand gripping the deformable display, which touches the deformable display, to be the inactive area.

10. The method of any one of the preceding claims, wherein the active area is an area in which activation occurs and the inactive area is an area in which deactivation occurs, the activation being sensing an input on a screen or performing an operation related to the sensed input and the deactivation being not sensing an input on the screen or not performing an operation related to the sensed input.

11. An electronic device comprising:
a deformable display (150);
a sensor unit (210) configured to sense deformation of the deformable display; and
a controller (170) configured to compare a degree of the sensed deformation with a predetermined value, to divide at least a part of the deformable display based on a result of the comparison, to determine at least a part of divided areas to be an active area or inactive area, and to control at least part of information displayed in at least a part of the divided areas.

12. The electronic device of claim 11, wherein if the degree of the sensed deformation is different from the predetermined value, the controller divides the deformable display into at least two areas.

13. The electronic device of claim 11 or 12, wherein the controller (170) is configured to determine at least one divided area based on at least one of sensing of at least one sensor in the sensor unit, the deformation degree of the deformable display, a deformation direction of the deformable display, and a deformation angle of the deformable display.

14. The electronic device of claim 13, wherein the at least one sensor is or includes at least one of a sensor that senses a hand gripping the deformable display, a sensor that senses a first point touched on the deformable display after the deformable display is gripped, and a sensor that senses shaking of the deformable display after the deformable display is gripped.

15. The electronic device of claim 14, wherein the controller (170) is configured to determine whether at least one of objects included in an area determined to be the inactive area responds to an input on the deformable display and to relocate the at least one object in response to the input to the active area.
